# EUROPEAN PATENT SPECIFICATION

(11) **EP 4 431 762 B1**
(45) Date of publication and mention of the grant of the patent: **17.09.2025**
(21) Application number: 24164302.2
(22) Date of filing: 18.03.2024
(51) Int. Cl.: F16H 57/027, F16H 57/04

(54) **WORK VEHICLE**
ARBEITSFAHRZEUG
VÉHICULE DE TRAVAIL

(30) Priority: 16.03.2023 IT 202300005013
(43) Date of publication of application: 18.09.2024
(73) Proprietor: CNH Industrial Italia S.p.A., 10156 Torino (IT)
(72) Inventor: LUCENTE, Aldo, 10156 Turin (IT); TERZI, Stefano, 10156 Turin (IT)
(74) Representative: CNH Industrial IP Department

(56) References cited:
- EP-A1- 4 067 145
- DE-A1- 102015 223 566
- DE-A1- 102018 211 360
- GB-A- 2 322 421
- JP-A- 2003 166 630
- JP-A- S60 121 324

## Description

### TECHNICAL FIELD

The present invention concerns a work vehicle.

### BACKGROUND OF THE INVENTION

Work vehicles are known comprising a main body, a locomotion system including wheels or tracks for moving the main body with respect to the ground, a propulsion system including a thermal engine and/or an electric motor, and a driveline, which operatively connects the locomotion system to the propulsion system.

In general, the drivelines comprise a plurality of mechanical components (e.g., gears and bearings), which are lubricated to reduce friction and wear between their contact surfaces. By way of example, the drivelines are lubricated by oil splashing, i.e., by splashing caused by the movement of the mechanical components.

For this purpose, the work vehicle comprises an oil sump, which contains oil in which the mechanical components are partially immersed, and which is adapted to collect the oil that falls due to gravity after lubricating the mechanical components.

However, the capacity of oil of the drivelines is limited by the fact that as the amount of oil increases, the power losses increase, as a consequence of the fact that the oil level in the oil sump rises and the portion of the mechanical components immersed in the oil increases.

The work vehicles are known to further comprise at least one hydraulically operated implement and a relative hydraulic circuit for the actuation of the implement.

In detail, the circuit comprises the oil sump, the hydraulically operated implement, a pump and a remote valve, as shown for example in DE102015223566A1. The oil pump is adapted to suck oil from the oil sump and to deliver it to the remote valve. The oil flowing through the remote valve is used to actuate the implement and is then discharged into the oil sump. In other words, the oil contained in the oil sump is adapted both to lubricate the mechanical components of the driveline and to actuate the implement(s).

However, the flow of oil arriving in the oil sump from the remote valve is characterized by high velocity and tends to cause turbulence of the oil contained therein, consequently affecting lubrication quality.

The quality of lubrication is further reduced by aeration of the oil caused by splashing and high velocity of the flow coming from the remove valve.

Therefore, there is a need within the industry for a driveline assembly for a work vehicle allowing the quality of lubrication of the mechanical components of the driveline to be improved.

### SUMMARY OF THE INVENTION

The aforementioned aim is reached by a work vehicle, as claimed in the appended independent claim.

Preferred embodiments of the invention are realized according to the claims dependent or related to the above independent claim.

### BRIEF DESCRIPTION OF DRAWINGS

For a better understanding of the present invention, one preferred embodiment is described in the following, by way of a non-limiting example, with reference to the attached drawing wherein:

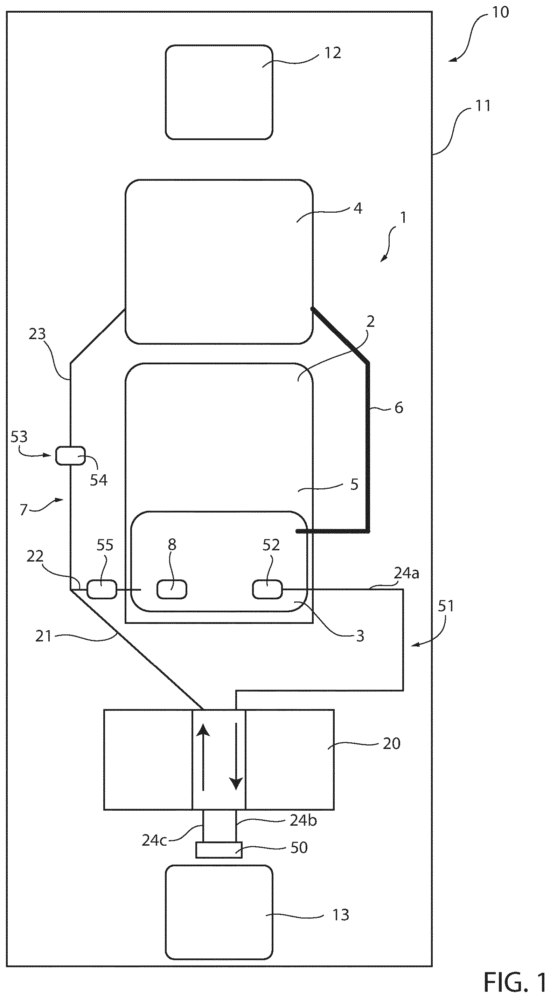

- Figure 1 is a schematic representation of a work vehicle comprising a driveline assembly according to the present invention.

### DETAILED DESCRIPTION OF THE INVENTION

With reference to figure 1, numeral 10 indicates a work vehicle, in particular an agricultural vehicle such as a tractor.

Work vehicle 10 comprises a main body 11, a plurality of wheels 12, which are rotatable relative to main body 11 about respective rotational axes and motor means 13 (e.g., a thermal engine and/or an electric motor) adapted to rotate wheels 12 about their respective rotational axes.

Work vehicle 10 further comprises a driveline assembly 1. Driveline assembly 1 comprises, in turn, a driveline 2 adapted to operatively connect motor means 13 to wheels 12 and an oil sump 3 for collecting by gravity an oil adapted to lubricate driveline 2.

Driveline 2 comprises a plurality of mechanical components - which are known per se and not shown - adapted to transmit motion from motor means 13 to wheels 12. By way of example, driveline 2 comprises a plurality of wheels and bearings. In further detail, at least some of the mechanical components are at least partially immersed in the oil contained in oil sump 3.

Driveline assembly 1 also comprises a container 5 enclosing at least in part driveline 2. In addition, container 5 comprises oil sump 3 or is defined at least in part by oil sump 3. Preferably but not necessarily, oil sump 3 constitutes the lowermost portion of container 5 according to a direction vertical to the ground on which wheels 12 rest, i.e., the portion of container 5 closest to the ground.

Advantageously, driveline assembly 1 comprises an oil reservoir 4 adapted to contain oil, fluidly connected to oil sump 3 and arranged at least in part below oil sump 3 according to the direction of the gravitational acceleration vector g. In particular, oil reservoir 4 is adapted to contain the same oil contained in oil sump 3.

Specifically, the acceleration vector g to be considered is the one acting on driveline assembly 1 or work vehicle 10. For example, the acceleration vector g is applied in the center of mass of work vehicle 10.

In other words, oil reservoir 4 is closer to the ground on which wheels 12 rest than oil sump 3.

Preferably, oil reservoir 4 is arranged underneath oil sump 3 according to the direction of the gravitational acceleration vector g.

Oil reservoir 4 is arranged externally to container 5. Therefore, the mechanical components of driveline 2 are not immersed in the oil volume contained in oil reservoir 4.

In detail, driveline assembly 1 comprises a duct 6 fluidly connecting oil sump 3 to oil reservoir 4. Accordingly, the oil contained in oil sump 3 flows to oil reservoir 4 through duct 6 due to gravity.

Work vehicle 1 further comprises at least one implement 50, which is hydraulically operated and an actuation circuit 51 for the actuation of implement 50. By way of example, implement 50 is a front end loader.

The actuation circuit 51 comprises, in turn, a pump 52 adapted to suck oil from oil sump 3, a remote valve 20 fluidly connected to pump 52, the implement 50 fluidly connected to remote valve 20 and a duct 7 fluidly connecting remote valve 20 to driveline assembly 1 (Figure 1).

Pump 52 is adapted to deliver the oil sucked from oil sump 3 to remote valve 20.

As schematized in Figure 1, actuation circuit 51 comprises in succession a stretch 24a fluidly connecting pump 52 to remote valve 20, a stretch 24b fluidly connecting remote valve 20 to implement 50 and a stretch 24c fluidly connecting implement 50 to remote valve 20.

Duct 7 comprises a stretch 21 extending from remote valve 20, a stretch 22 fluidly connecting stretch 21 to oil sump 3 and a stretch 23 fluidly connecting stretch 21 to oil reservoir 4. In detail, stretches 21, 22 and 23 are jointed with one another by a T-connection or a three-way fitting.

According to the invention, driveline assembly 1 comprises valve means adapted to control the flow of oil between stretch 21 and oil sump 3 and/or between stretch 21 and oil reservoir 4. In particular, the valve means are arranged at duct 7 and comprise a hydraulically actuated valve or an electro-hydraulically actuated valve.

In detail, the valve means are adapted to control the flow of oil such that the flow rate of oil flowing between stretch 21 and oil reservoir 4 is greater than the flow rate of oil flowing between stretch 21 and oil sump 3. In further detail, the valve means may be adapted to completely deny the fluidic communication between stretch 21 and oil sump 3 and allow the fluidic communication between stretch 21 and oil reservoir 4.

Furthermore, the extension of the cross section of duct 6 is greater than the extension of the cross section of duct 7. In detail, cross section shall mean the section of the duct 6, 7 perpendicular to the longitudinal direction of the same duct 6, 7.

Preferably, actuation circuit 51 comprises deaeration means 53 adapted to remove oxygen and other dissolved gases from the oil flowing through it. In detail, actuation circuit 51 comprises a deaerator 54 at stretch 22 and/or a deaerator 55 at stretch 23.

Preferably but not necessarily, drivelines assembly 1 also comprises a pumping system 8, which is adapted to suck oil from oil sump 3 and to direct it to the mechanical components of driveline 2 to be lubricated.

The operation of driveline assembly 1 and work vehicle 10 according to the present invention is described in the following.

In use, the oil of driveline assembly 1 is contained in part in oil sump 3 and in part in oil reservoir 4.

During operation, driveline 2 transmits motion from motor means 13 to wheels 12 and the mechanical components of driveline 2 are lubricated by oil splashing and pumping system 8. In particular, at least some of the mechanical components of driveline 2 are partially immersed in the oil contained in oil sump 3 and lubricate the contact surfaces thereof by virtue of their movements. At the same time, pumping system 8 sucks oil from oil sump 3 and sprays it towards the mechanical components of driveline 2.

After lubricating the surfaces of mechanical components, the oil falls by gravity and is collected by oil sump 3. In addition, the oil flows from oil sump 3 to oil reservoir 4 through duct 6 due to gravity.

At the same time, pump 52 sucks oil from oil sump 3 and delivers it to remote valve 20. Remote valve 20, in turn, delivers the sucked oil towards implement 50. In detail, oil flows from pump 52 to remote valve 20 through stretch 24a and from remote valve 20 to implement 50 through stretch 24b.

After actuating implement 50, the oil flows back to remote valve 20 through stretch 24c and then towards oil sump 3 through stretch 22 and oil reservoir 4 through stretch 23.

In the not-shown embodiment comprising the valve means, valve means control the flow of oil flowing between stretch 21 and oil sump 3 and/or between stretch 21 and oil reservoir 4.

In view of the foregoing, the advantages of driveline assembly 1 and work vehicle 10 according to the invention are apparent.

In particular, since driveline assembly 1 comprises oil reservoir 4, which is connected to oil sump 3 and arranged below oil sump 3, the oil capacity of driveline assembly 1 is increased without causing an increase in power losses.

Since driveline assembly 1 comprises duct 7, which fluidly connects remote valve 20 to oil sump 3 and oil reservoir 4, the oil flow from remote valve 20 is split between oil sump 3 and oil reservoir 4. This allows the velocity of the flow coming from remote valve 20 and directed to oil sump 3 to be reduced. As a result, turbulence and aeration of the oil is limited. In particular, oil reservoir 4 allows the oil to stagnate and to be deaerated. This effect can be enhanced by causing the oil flow rate directed to the oil reservoir to be much greater than the oil flow rate directed to the oil sump.

For the same reason as above, the suction capability of pumping system 8 is increased.

In addition, since the extension of the cross section of duct 6 is greater than the extension of the cross section of duct 7, the velocity of the oil flowing from oil reservoir 4 to oil sump 3 through duct 6 is significantly reduced. This allows turbulence and aeration of the oil to be further limited. Deaeration may be enhanced also by means of deaerator means 53.

It is clear that modifications can be made to driveline assembly 1 and work vehicle 10 which do not extend beyond the scope of protection defined by the claims.

In particular, work vehicle 10 might comprise tracks instead of wheels 12.

Work vehicle 10 might comprise more than one implement 50 and more than one actuation circuits 51.

## Claims

1. Work vehicle (10) comprising:
- a main body (11);
- locomotion means (12) adapted to move said main body (11) with respect to a reference system;
- motor means (13) adapted to drive said locomotion means (12);
- a driveline assembly (1) comprising:
- a driveline (2) adapted to operatively connect the motor means (13) of said work vehicle (10) to the locomotion means (12; of said work vehicle (10);
- an oil sump (3) adapted to collect an oil lubricating, in use, said driveline (2);
- an oil reservoir (4) adapted to contain said oil; wherein said oil reservoir (4) is fluidly connected to said oil sump (3) and arranged at least in part below said oil sump (3) according to the direction of the gravitational acceleration vector (g);
said work vehicle further comprising:
- at least one implement (50), which is hydraulically operated, in use;
- an actuation circuit (51) for the actuation of said implement (50);
**characterized in that**
said actuation circuit (51) comprising:
- a pump (52) adapted to suck said oil from said oil sump (3);
- a remote valve (20) fluidly connected to said pump (52) and said implement (50);
- a second duct (7) fluidly connecting said remote valve (20) to said driveline assembly (1);
said pump (52) being adapted to deliver, in use, said oil sucked from said oil sump (3) to said remote valve (20), wherein said second duct (7) comprises:
- a first stretch (21) extending from said remote valve (20) ;
- a second stretch (22) fluidly connecting said first stretch (21) to said oil sump (3); and
- a third stretch (23) fluidly connecting said first stretch (21) to said oil reservoir (4), said work vehicle comprises valve means adapted to control the flow of oil between said first stretch (21) and said oil sump (3) and/or between said first stretch (21) and said oil reservoir (4).

2. Work vehicle according to claim 1, comprising a container (5) enclosing at least in part said driveline (2);
said container (5) enclosing said oil sump (3) or defined at least in part by said oil sump (3);
wherein said oil reservoir (4) is arranged externally to said container (5).

3. Work vehicle according to claim 1 or 2, comprising a first duct (6) fluidly connecting said oil sump (3) to said oil reservoir (4).

4. Work vehicle according to any one of the foregoing claims, comprising a pumping system (8) adapted to suck said oil from said oil sump (3) and to direct it, in use, to said driveline (2) to lubricate it.

5. Work vehicle according to any of the foregoing claims, wherein said valve means are adapted to control the flow of oil such that the flow rate of said oil flowing, in use, between said first stretch (21) and said oil reservoir (4) is greater than the flow rate of said oil flowing, in use, between said first stretch (21) and said oil sump (3).

6. Work vehicle according to any of the foregoing claims, wherein said valve means comprise a hydraulically actuated valve or an electro-hydraulically actuated valve.

7. Work vehicle according to any of the foregoing claims, wherein the extension of the cross section of said first duct (6) is greater than the extension of the cross section of said second duct (7).

8. Work vehicle according to any of the foregoing claims, wherein said actuation circuit (51) comprises deaeration means (53).

9. Work vehicle according to any of the foregoing claims, wherein deaeration means (53) comprise a deaerator (54, 55) at said second stretch (22) and/or at said third stretch (23).

## Patentansprüche

1. Nutzfahrzeug (10), umfassend:
- einen Fahrzeugaufbau (11);
- Fortbewegungsmittel (12), die dazu eingerichtet sind, den Fahrzeugaufbau (11) relativ zu einem Bezugssystem zu bewegen;
- Motormittel (13), die dazu eingerichtet sind, die Fortbewegungsmittel (12) anzutreiben;
- eine Antriebsstranganordnung (1), umfassend:
- einen Antriebsstrang (2), der dazu eingerichtet ist, die Motormittel (13) des Nutzfahrzeugs (10) mit den Fortbewegungsmitteln (12) des Nutzfahrzeugs (10) wirkend zu verbinden;
- eine Ölwanne (3), die dazu eingerichtet ist, Öl aufzufangen, das während des Betriebs den Antriebsstrang (2) schmiert;
- einen Ölvorratsbehälter (4), der dazu eingerichtet ist, das Öl zu enthalten; wobei der Ölvorratsbehälter (4) fluidisch mit der Ölwanne (3) verbunden ist und in Richtung des Vektors der Gravitationsbeschleunigung (g) zumindest teilweise unterhalb der Ölwanne (3) angeordnet ist;
wobei das Nutzfahrzeug weiterhin umfasst:
- wenigstens ein Arbeitsgerät (50), das während des Betriebs hydraulisch betätigt wird;
- einen Betätigungskreis (51) zum Betätigen des Arbeitsgeräts (50);
**dadurch gekennzeichnet, dass** der Betätigungskreis (51) umfasst:
- eine Pumpe (52), die dazu eingerichtet ist, Öl aus der Ölwanne (3) anzusaugen;
- ein entferntes Ventil (20), das fluidisch mit der Pumpe (52) und dem Arbeitsgerät (50) verbunden ist;
- eine zweite Leitung (7), die das entfernte Ventil (20) fluidisch mit der Antriebsstranganordnung (1) verbindet;
wobei die Pumpe (52) dazu eingerichtet ist, während des Betriebs das aus der Ölwanne (3) angesaugte Öl dem entfernten Ventil (20) zuzuführen, wobei die zweite Leitung (7) umfasst:
- einen ersten Abschnitt (21), der sich vom entfernten Ventil (20) aus erstreckt;
- einen zweiten Abschnitt (22), der den ersten Abschnitt (21) fluidisch mit der Ölwanne (3) verbindet; und
- einen dritten Abschnitt (23), der den ersten Abschnitt (21) fluidisch mit dem Ölvorratsbehälter (4) verbindet;
wobei das Nutzfahrzeug Ventilmittel umfasst, die dazu eingerichtet sind, den Ölfluss zwischen dem ersten Abschnitt (21) und der Ölwanne (3) und/oder zwischen dem ersten Abschnitt (21) und dem Ölvorratsbehälter (4) zu steuern.

2. Nutzfahrzeug nach Anspruch 1, wobei es einen Behälter (5) umfasst, der den Antriebsstrang (2) zumindest teilweise umschließt;
wobei der Behälter (5) die Ölwanne (3) umschließt oder zumindest teilweise durch die Ölwanne (3) definiert ist;
wobei der Ölvorratsbehälter (4) außerhalb des Behälters (5) angeordnet ist.

3. Nutzfahrzeug nach Anspruch 1 oder 2, wobei es eine erste Leitung (6) umfasst, die die Ölwanne (3) fluidisch mit dem Ölvorratsbehälter (4) verbindet.

4. Nutzfahrzeug nach einem der vorhergehenden Ansprüche, wobei es ein Pumpensystem (8) umfasst, das dazu eingerichtet ist, Öl aus der Ölwanne (3) anzusaugen und es während des Betriebs dem Antriebsstrang (2) zur Schmierung desselben zuzuführen.

5. Nutzfahrzeug nach einem der vorhergehenden Ansprüche, wobei die Ventilmittel dazu eingerichtet sind, den Ölfluss derart zu steuern, dass die Durchflussrate des Öls, das während des Betriebs zwischen dem ersten Abschnitt (21) und dem Ölvorratsbehälter (4) fließt, größer ist als die Durchflussrate des Öls, das während des Betriebs zwischen dem ersten Abschnitt (21) und der Ölwanne (3) fließt.

6. Nutzfahrzeug nach einem der vorhergehenden Ansprüche, wobei die Ventilmittel ein hydraulisch betätigtes Ventil oder ein elektrohydraulisch betätigtes Ventil umfassen.

7. Nutzfahrzeug nach einem der vorhergehenden Ansprüche, wobei der Querschnitt der ersten Leitung (6) größer ist als der Querschnitt der zweiten Leitung (7).

8. Nutzfahrzeug nach einem der vorhergehenden Ansprüche, wobei der Betätigungskreis (51) Entlüftungsmittel (53) umfasst.

9. Nutzfahrzeug nach einem der vorhergehenden Ansprüche, wobei die Entlüftungsmittel (53) einen Entlüfter (54, 55) im zweiten Abschnitt (22) und/oder dritten Abschnitt (23) umfassen.

## Revendications

1. Véhicule de travail (10) comprenant :
- un corps principal (11) ;
- des moyens de déplacement (12) adaptés pour déplacer ledit corps principal (11) par rapport à un système de référence ;
- des moyens moteurs (13) adaptés pour entraîner lesdits moyens de déplacement (12) ;
- un assemblage d'arbres de transmission (1) comprenant :
- une ligne d'arbres de transmission (2) adaptée pour raccorder fonctionnellement les moyens moteurs (13) dudit véhicule de travail (10) aux moyens de déplacement (12) dudit véhicule de travail (10) ;
- un carter d'huile (3) adapté pour recueillir une huile lubrifiant, en utilisation, ladite ligne d'arbres de transmission (2) ;
- un réservoir d'huile (4) adapté pour contenir ladite huile ; dans lequel ledit réservoir d'huile (4) est raccordé fluidiquement audit carter d'huile (3) et agencé au moins en partie sous ledit carter d'huile (3) selon la direction du vecteur d'accélération gravitationnelle (g) ;
ledit véhicule de travail comprenant en outre :
- au moins un outil (50) à commande hydraulique, en utilisation ;
- un circuit d'actionnement (51) pour l'actionnement dudit outil (50) ;
**caractérisé en ce que** ledit circuit d'actionnement (51) comprend :
- une pompe (52) adaptée pour aspirer ladite huile à partir dudit carter d'huile (3) ;
- une vanne à commande à distance (20) raccordée fluidiquement à ladite pompe (52) et audit outil (50) ;
- un second conduit (7) raccordant fluidiquement ladite vanne à commande à distance (20) audit assemblage d'arbres de transmission (1) ;
ladite pompe (52) étant adaptée pour fournir, en utilisation, ladite huile aspirée à partir dudit carter d'huile (3) à ladite vanne à commande à distance (20), dans lequel ledit second conduit (7) comprend :
- un premier allongement (21) s'étendant à partir de ladite vanne à commande à distance (20)
- un deuxième allongement (22) raccordant fluidiquement ledit premier allongement (21) audit carter d'huile (3) ; et
- un troisième allongement (23) raccordant fluidiquement ledit premier allongement (21) audit réservoir d'huile (4),
ledit véhicule de travail comprend des moyens de régulation adaptés pour contrôler l'écoulement d'huile entre ledit premier allongement (21) et ledit carter d'huile (3) et/ou entre ledit premier allongement (21) et ledit réservoir d'huile (4).

2. Véhicule de travail selon la revendication 1, comprenant un conteneur (5) renfermant au moins en partie ladite ligne d'arbres de transmission (2) ;
ledit conteneur (5) renfermant ledit carter d'huile (3) ou étant défini au moins en partie par ledit carter d'huile (3) ;
dans lequel ledit réservoir d'huile (4) est agencé à l'extérieur dudit conteneur (5).

3. Véhicule de travail selon la revendication 1 ou la revendication 2, comprenant un premier conduit (6) raccordant fluidiquement ledit carter d'huile (3) audit réservoir d'huile (4).

4. Véhicule de travail selon l'une quelconque des revendications précédentes, comprenant un système de pompage (8) adapté pour aspirer ladite huile à partir dudit carter d'huile (3) et la diriger, en utilisation, vers ladite ligne d'arbres de transmission (2) pour la lubrifier.

5. Véhicule de travail selon l'une quelconque des revendications précédentes, dans lequel lesdits moyens de régulation sont adaptés pour contrôler l'écoulement d'huile de sorte que le débit de ladite huile s'écoulant, en utilisation, entre ledit premier allongement (21) et ledit réservoir d'huile (4) est supérieur au débit de ladite huile s'écoulant, en utilisation, entre ledit premier allongement (21) et ledit carter d'huile (3).

6. Véhicule de travail selon l'une quelconque des revendications précédentes, dans lequel lesdits moyens de régulation comprennent une vanne à actionnement hydraulique ou une soupape à actionnement électrohydraulique.

7. Véhicule de travail selon l'une quelconque des revendications précédentes, dans lequel l'extension de la section transversale dudit premier conduit (6) est supérieure à l'extension de la section transversale dudit second conduit (7).

8. Véhicule de travail selon l'une quelconque des revendications précédentes, dans lequel ledit circuit d'actionnement (51) comprend des moyens de désaération (53).

9. Véhicule de travail selon l'une quelconque des revendications précédentes, dans lequel les moyens de désaération (53) comprennent un désaérateur (54, 55) au niveau dudit deuxième allongement (22) et/ou dudit troisième allongement (23).
